# EUROPÄISCHE PATENTSCHRIFT

(11) **EP 0 263 246 B1**
(45) Veröffentlichungstag und Bekanntmachung des Hinweises auf die Patenterteilung: **22.12.1993**
(21) Anmeldenummer: 87110041.8
(22) Anmeldetag: 11.07.1987
(51) Int. Cl.: H04J 3/04, H04J 3/00, H04L 25/26

(54) **Explosionsgeschützter Multiplexer**
Explosion-protected multiplexer
Multiplexeur protégé contre des explosions

(30) Priorität: 03.10.1986 DE 3633676
(43) Veröffentlichungstag der Anmeldung: 13.04.1988
(73) Patentinhaber: R. Stahl Schaltgeräte GmbH, D-74653 Künzelsau (DE)
(72) Erfinder: Rapp, Jürgen, D-7118 Künzelsau (DE); Bruch, Peter, D-7112 Waldenburg (DE); Schimmele, Anton, D-7107 Neckarsulm (DE)
(74) Vertreter: Patentanwälte Rüger, Barthelt & Abel

(56) Entgegenhaltungen:
- EP-A- 0 044 685
- EP-A- 0 091 562
- US-A- 4 380 764
- US-A- 4 484 122
- Siemens AG, Katalog MP29, Teil 10, Juni 1984:"Feldmultiplexer FM100"

## Beschreibung

Die Erfindung betrifft einen in explosionsgefährdeten Bereichen verwendbaren, explosionsgeschützten Multiplexer mit den Merkmalen des Anspruches 1.

Ein gattungsgemäßer Multiplexer ist unter der Bezeichnung "Feldmultiplexer FM 100" aus der Praxis bekannt. Seine Architektur ist in dem Katalog MP 29, Teil 10, Juni 1984, der Firma Siemens erläutert.

Der bekannte Multiplexer ermöglicht einen gebündelten Datenverkehr zwischen einem im nicht gefährdeten Bereich aufgestellten Prozeßsteuersystem und Feldgeräten, wie Meß- und Stellgeräten, die sich in explosionsgefährdeten Bereichen befinden. Um diese Datenbündelung durchzuführen, enthält der Multiplexer eine mit einem E/A-Port versehene Sendeempfangseinheit, über die im Vollduplexbetrieb der Datenverkehr mit dem in der Warte aufgestellten zentralen System abgewickelt wird. Hierbei kann zum Zweck der galvanischen Trennung in die Vollduplexdatenverbindung eine mittels Optokopplern aufgebaute Sicherheitstrenneinrichtung zwischengeschaltet werden.

Die Sende- und Empfangseinheit übermittelt die von der Zentrale her erhaltenen Daten an eine in dem Multiplexer enthaltene Übertragungssteuereinheit, die ihrerseits einen E/A-Bus bedient. An den E/A-Bus sind die E/A-Baugruppen angeschlossen, die ihrerseits wiederum unmittelbar mit dem entsprechenden Feldgerät in Verbindung stehen.

Umgekehrt werden von den Feldgeräten erfaßte Daten über die entsprechende E/A-Schnittstellenbaugruppe in den E/A-Bus eingespeist und von der Übertragungssteuereinheit an die Sende- und Empfangseinheit zwecks Absendung an das Zentralsystem in der Warte übergeben.

Die Koordination an dem E/A-Bus erfolgt durch die Übertragungssteuereinheit, die im Pollingbetrieb die entsprechende E/A-Schnittstellenbaugruppen adressiert.

In einem zu der Übertragungssteuereinheit gehörenden Speicher können auch Daten zwischengespeichert werden, um Kollisionen zwischen Empfangs- und Sendeaufträgen an dem E/A-Bus zu vermeiden.

Bei dem Multiplexer sind sowohl der E/A-Bus als auch die einzelnen E/A-Schnittstellenbaugruppen in der Zündschutzart "Eigensicherheit" nach DIN EN 50020 ausgeführt.

Die Eigensicherheit wird dabei durch Vorschaltwiderstände erreicht, über die die Übertragungssteuereinheit mit dem E/A-Bus bzw. der E/A-Bus mit den E/A-Schnittstellenbaugruppen verbunden ist.

Dies hat zur Folge, daß die größtmögliche Anzahl von eigensicheren E/A-Schnittstellenbaugruppen durch die Größe der Schutzwiderstände festgelegt ist, die die Eigensicherheit gewährleisten sollen. Dies ergibt sich, weil letztlich alle E/A-Schnittstellenbaugruppen mit einander entsprechenden Leitungen an dieselbe Leitung des E/A-Bus angeschlossen sind, so daß selbst bei galvanisch getrennter Stromversorgung an dieser Busleitung ein Stromknoten entsteht, aus dem im Kurzschlußfall dieser Leitung mit Masse ein Strom fließen kann, der gleich der Summe der zulässigen Ströme der einzelnen eigensicheren E/A-Schnittstellenbaugruppen ist. Dieser im ungünstigsten Falle fließende Kurzschlußstrom darf nicht größer als der nach DIN EN 50020 sein, wenn nach wie vor Eigensicherheit gegeben sein soll. Aus diesem Kurzschlußstrom im Worst-Case-Fall ergibt sich umgekehrt die Größe der notwendigen Schutzwiderstände und damit die maximal mögliche Anzahl von anschließbaren E/A-Schnittstellenbaugruppen.

Eine Vergrößerung der Anzahl wäre nur bei gleichzeitiger Vergrößerung der Schutzwiderstände möglich, die in jeder Leitung eingefügt werden müßten, die zu dem E/A-Bus führt.

Außerdem müssen bei der galvanischen Verbindung mit dem E/A-Bus, bei der auch die einzelnen E/A-Schnittstellenbaugruppen untereinander galvanisch verbunden sind, die entsprechenden Stromkreise mit dem Potentialausgleich der explosionsgeschützten Anlage verbunden werden, um gefährliche Spannungen zwischen den verschiedenen Stromkreisen oder zu irgendwelchen Metallteilen zu vermeiden, da über die galvanische Verbindung Unterschiede im Erdungspotential eingeschleppt werden könnten.

Ausgehend hiervon ist es Aufgabe der Erfindung, einen in explosionsgefährdeten Bereichen verwendbaren explosionsgeschützten Multiplexer zu schaffen, der keine Anbindung der Stromkreise an den Potentialausgleich der explosionsgeschützten Anlage im Prozeßbereich erfordert und der außerdem beliebig ohne Rückwirkung auf bereits installierte Teile ausbaubar ist.

Diese Aufgabe wird erfindungsgemäß durch den Multiplexer mit den Merkmalen des Anspruches 1 gelöst.

Infolge der galvanischen Trennung an der Schnittstelle zwischen dem Zentralteil des Multiplexers und der E/A-Schnittstellenbaugruppe entstehen auch keinerlei galvanische Verbindungen zwischen den einzelnen E/A-Schnittstellenbaugruppen, weshalb weder diese noch die an ihnen angeschlossenen Feldgeräte mit dem Potentialausgleich verbunden werden müssen. Schließlich kann die Anzahl der E/A-Schnittstellenbaugruppen - jedenfalls was den Explosionsschutz anbetrifft - beliebig verändert werden, da es wegen der galvanischen Trennung, auch der E/A-Schnittstellenbaugruppen untereinander, nicht zu gefährlichen Stromknoten kommen kann, aus denen im Fehlerfall ein unzulässig großer Strom fließen könnte.

Die galvanische Trennung ist außerdem vorteilhaft, um eine wechselseitige Beeinflussung der E/A-Stromkreise zu vermeiden und um die Feldgeräte unabhängig von ihrer Potentialanbindung freizügig anschließen zu können.

Diese galvanische Trennung läßt sich entweder mit Hilfe von Transformatoren verwirklichen oder mit Hilfe von Optokopplern. Im ersteren Falle ließe sich zwar eine größere Leistung übertragen, doch sind Transformatoren verhältnismäßig teuer in der Herstellung und gestatten nicht die Übertragung von Gleichspannungspegeln, was mit Optokopplern durchaus möglich ist. Im übrigen sind Optokoppler weniger empfindlich gegen Streufelder.

Wenn der Multiplexer intern keinerlei Puffermöglichkeiten hat, muß er im Lineswitchingbetrieb arbeiten. Wird er hingegen mit internen Speichermöglichkeiten versehen, kann die Datenverbindung zu dem entfernten System nach Art eines Packageswitching oder Message-switching abgewickelt werden.

Wenn auch der E/A-Port, an dem das zentrale System in der Warte über entsprechende Leitungen angeschlossen ist, mit galvanischer Trennung ausgeführt ist, ergeben sich weitere Vereinfachungen hinsichtlich des Explosionsschutzes.

Je nach verwendeter Architektur kann sowohl ein Partylinebetrieb als auch eine Punkt-zu-Punkt-Verbindung zwischen den Feldgeräten und dem Multiplexer verwirklicht werden. Im ersteren Falle enthält der Multiplexer einen E/A-Bus, während im anderen Falle von der Übertragungssteuereinheit zu schaltende Schaltermittel vorhanden sind, über die wahlweise die Verbindung mit den E/A-Schnittstellenbaugruppen hergestellt wird. Im letzteren Falle ist der bauseitige Aufwand, zumindest bei den E/A-Schnittstellenbaugruppen, geringer , da diese weder eine Adressengenerierung noch eine Adresserkennung benötigen, wie dies bei Pollingbetrieb notwendig wäre.

Ein sehr einfacher Aufbau besteht in der Verwendung von Analogschaltern, da über diese ohne weiteres der Signalfluß in beiden Richtungen möglich ist, so daß Halbduplexverbindungen zu den E/A-Schnittstellenbaugruppen ohne weiteres möglich sind. Es können dann an der der E/A-Schnittstellenbaugruppe zugekehrten Anschlußseite der Schalter sowohl die Eingangs- als auch die Ausgangsseite zweier Optokoppler gleichzeitig angeschlossen sein, so daß ohne Änderung an dem Schaltzustand wahlweise gesendet oder empfangen werden kann.

Dabei ist es vorteilhaft, wenn auf der der Übertragungssteuereinrichtung zugewandten Seite der Schalter zwei Verstärker, der eine mit seinem Ausgang und der andere mit seinem Eingang angeschlossen sind, damit auch hier keine Umschaltung erforderlich ist. Vielmehr genügt es, je nach Betriebsrichtung, den einen oder den anderen Verstärker an einem Inhibiteingang zu sperren, so daß sein Ausgang in den hochohmigen Zustand übergeht und er damit keinen Einfluß auf die über den anderen Verstärker übertragenen Daten hat.

Um den Optokoppler im geschalteten Zustand mit dem notwendigen Versorgungsstrom zu speisen, ist die Schaltung aus den antiparallel verbundenen Verstärkern mit einem Pull-up-Widerstand versehen.

In einem anderen Ausführungsbeispiel können anstelle der Analogschalter auch lediglich in einer Richtung arbeitende Digitalschalter eingesetzt werden, die wiederum durch die Übertragungssteuereinheit entsprechend geschaltet werden. Auch hierbei sind die den E/A-Schnittstellenbaugruppen zugekehrten Eingänge und Ausgänge jeweils parallelgeschaltet, gegebenenfalls unter Verwendung von Entkopplungswiderständen, um über die jeweilige Datenverbindung zu der entsprechenden E/A-Schnittstellenbaugruppe auch Halbduplexbetrieb abwickeln zu können.

In der Zeichnung ist ein Ausführungsbeispiel des Gegenstandes der Erfindung dargestellt. Es zeigen:
- Fig. 1: ein Blockschaltbild des Multiplexers gemäß der Erfindung,
- Fig. 2: ein weiter detailliertes Blockschaltbild der Schnittstelle zu den E/A-Schnittstellenbaugruppen unter Verwendung von Analogschaltern, für den Multiplexer nach Fig. 1 und
- Fig. 3: ein weiter detailliertes Blockschaltbild einer anderen Ausführungsform für die Schnittstelle zu den E/A-Schnittstellenbaugruppen, ebenfalls für den Multiplexer nach Fig. 1, jedoch unter Verwendung von Digitalschaltern.

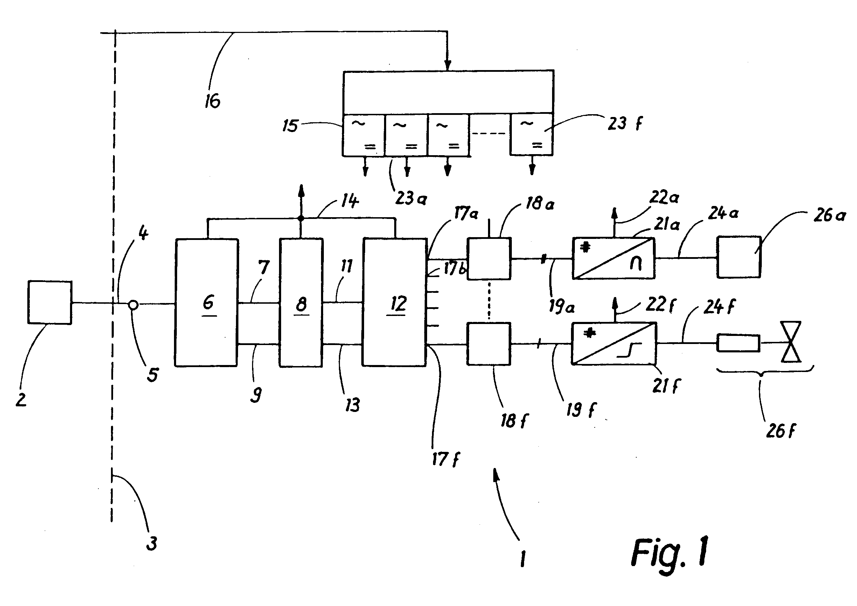

In Fig. 1 ist ein in explosionsgefährdeten Bereichen verwendbarer, explosionsgeschützter Multiplexer 1 mit seinen wesentlichen Funktionsblöcken stark schematisiert veranschaulicht. Der Multiplexer 1 dient dazu, gebündelt den Datenverkehr zwischen Feldgeräten, wie Meß- und Stellgeräten, und einer Zentraleinheit 2 abzuwickeln, die außerhalb des explosionsgefährdeten Bereiches in einer Warte aufgestellt ist. Die Grenze zwichen den Zonen ist durch eine gestrichelte Linie 3 schematisch veranschaulicht.

Die Verbindung mit dem Multiplexer 1 erfolgt über Halb- oder Vollduplexdatenverbindung 4, die an einen entsprechenden Port 5 des Multiplexers 1 angeschlossen ist. Die Verbindung kann auch ein Bussystem sein, über das der Multiplexer 1 zusammen mit anderen in Party-Line-Modus betrieben wird. Innerhalb des Multiplexers 1 steht der Port 5 mit einem Kommunikationsteil 6, auch Sende-/Empfangseinheit genannt, in Verbindung. Dieser Kommunikationsteil 6 liefert die empfangenen Daten über eine Datenverbindung 7 an eine Übertragungssteuereinheit 8 bzw. empfängt über die Leitung 7 von der Übertragungssteuereinheit 8 an die Warte abzusendende Daten. Der Betriebszustand des Kommunikationsteils wird über eine Verbindungsleitung 9 von der Übertragungssteuereinheit 8 kontrolliert.

Die Übertragungssteuereinheit 8 enthält vorzugsweise einen oder mehrere Mikroprozessoren, die das Steuerprogramm in bekannter Weise abwickeln, das in entsprechenden, nicht weiter veranschaulichten ROM-Speichern abgelegt ist. Darüber hinaus enthält die Übertragungssteuereinheit Pufferspeicher, um von dem Kommunikationsteil 6 erhaltene Daten oder dem Kommunikationsteil 6 zu übergebende Daten zu puffern.

Über eine weitere Datenverbindung 11 ist die Übertragungssteuereinheit mit einer Multiplexerschaltergruppe 12 verbunden, deren Schaltzustand über eine Steuerverbindung 13, die von der Multiplexerschaltergruppe zu der Übertragungssteuereinheit führt, von der Übertragungssteuereinheit aus gesteuert ist.

Stromversorgungsmäßig sind der Kommunikationsteil 6, die Übertragungssteuereinheit 8 und die Multiplexerschaltergruppe 12 über Leitungen 14 parallelgeschaltet und gemeinsam ein vorzugsweise eigensicheres Netzgerät 15 angeschlossen, das ebenfalls aus der Warte über Leitungen 16 seinen Strom erhält.

Die Multiplexerschaltergruppe 12 umfaßt eine Vielzahl von E/A-Anschlüssen 17a, 17b...17f, von denen jeder dazu vorgesehen ist, eine Datenverbindung mit einem der Feldgeräte herzustellen. Dabei ist jede der möglichen Datenverbindungen über Mittel 18a...18f geführt, die eine galvanische Trennung zwischen den Feldgeräten und den auf der anderen Seite der Trennmittel 18a...18f angeschlossenen Moduln gewährleisten.

Jedes der galvanischen Trennmittel 18a...18f bedient über entsprechende Verbindungsleitungen 19a...19f E/A-Schnittstellenbaugruppen oder Interface-Schaltungen 21a...21f, die dazu dienen, die dem jeweiligen Feldgerät zuzuführenden Daten entsprechend den Anforderungen des Feldgerätes umzuwandeln bzw. umgekehrt die vom Feldgerät erhaltenen Daten in das von dem Multiplexer 1 zu verarbeitende Datenformat umzusetzen.

Vorzugsweise enthalten die Interface-Schaltungen 21a...21f auch noch Analog-Digital-Wandler, so daß über die Trennmittel 18a...18f lediglich digitale Daten laufen.

Jede der Interface-Schaltungen 21a...21f ist zusammen mit dem zugehörigen, galvanisch damit verbundenen Teil der Trennmittel 18a...18f eigensicher nach DIN EN 50020 "i" ausgeführt und über jeweils getrennte Stromversorgungsleitungen 22a...22f mit einem entsprechend zugeordneten, ebenfalls eigensicheren Netzgerät 23a...23f verbunden, so daß auch über die Stromversorgungsleitungen keinerlei galvanische Querverbindung zwischen den Interface-Schaltungen 21a...21f erfolgt.

An der Ausgangsseite jeder Interface-Schaltung 21a...21f ist über eine entsprechende Leitung 24a...24f das jeweilige Feldgerät, beispielsweise ein Meßgerät 26a oder ein Stellgerät 26f in Gestalt eines Magnetventils angeschlossen. Dies bedeutet, daß beispielsweise über die Interface-Schaltung 21f nur Daten zu dem Feldgerät 26f laufen, während über die Interface-Schaltung 21a möglicherweise wegen der Eigenschaften des Meßgerätes 26a Daten in beiden Richtungen übertragen werden, d.h. es wird unter Umständen zumindest ein Startsignal von dem Multiplexer 1 an das Meßgerät 26a übermittelt.

Die Trennmittel 18a...18f sind deswegen auch entsprechend ausgelegt, d.h. zumindest diejenigen Trennmittel, die in beiden Richtungen übertragen sollen, sind wenigstens halbduplexfähig.

Wegen des Fehlens jeglicher galvanischer Querverbindungen zwischen den Interface-Schaltungen 21a...21f werden auch keine galvanischen Querverbindungen zwischen den Feldgeräten 26 erzeugt, so daß es nicht notwendig ist, diese mit dem Potentialausgleich zu verbinden. Andererseits hat die Änderung der Konfiguration, d.h. das Hinzufügen oder Wegnehmen von Feldgeräten keinerlei Einfluß auf die übrigen, schon oder noch angeschlossenen Interface-Schaltungen 21, jedenfalls was den Explosionsschutz anbetrifft.

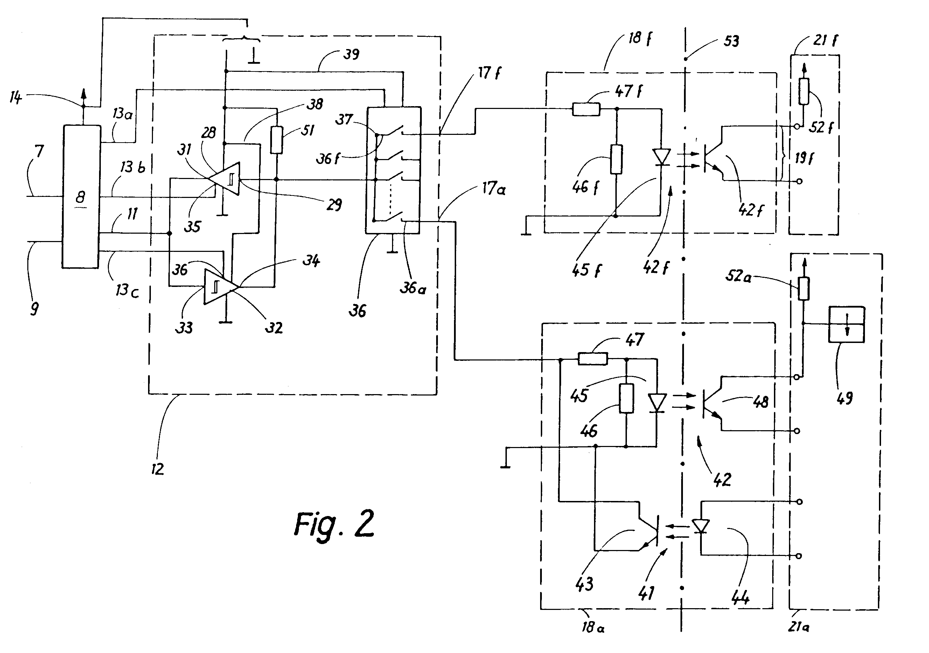

In Fig. 2 ist ein bevorzugtes Ausführungsbeispiel für die Multiplexerschaltergruppe 12 und die Trennmittel 18 veranschaulicht. Bei der Beschreibung dieses Ausführungsbeispiels werden für die bereits im Zusammenhang mit Fig. 1 erläuterten Funktionsblöcke und Verbindungen dieselben Bezugszeichen verwendet.

Die Multiplexerschaltergruppe 12 enthält einen ersten Verstärker 28 mit einem Dateneingang 29 sowie einem Tri-State-Ausgang 31 und einen zweiten Verstärker 32 mit einem Dateneingang 33 und einem Tri-State-Ausgang 34. Beide Verstärker 28 und 32 haben eine Schmitt-Trigger-Charakteristik und können an Inhibiteingängen 35 bzw. 36 in den Zustand mit hochohmigem Ausgang überführt werden. Diese Inhitbiteingänge 35 und 36 sind über Steuerleitungen 13b und 13c mit entsprechenden Ausgängen der Übertragungssteuereinheit 8 verbunden. Ferner liegt der Ausgang 31 über die Datenleitung 11 ebenso wie der Eingang 33 über die Datenleitung 11 an der Übertragungssteuereinheit 8.

Die Multiplexerschaltergruppe 12 enthält zusätzlich zu den beiden Verstärkern 28 und 32 noch eine Gruppe 36 steuerbarer Analogschalter, die mit ihren Anschlüssen 37 parallelgeschaltet und einerseits mit dem Eingang 29 des Verstärkers 28 und andererseits mit dem Ausgang 34 des Verstärkers 32 verbunden sind. Der Eingang 29 des Verstärkers 28 ist damit zu dem Ausgang 34 des Verstärkers 32 parallelgeschaltet.

Die Steuerung des Schaltzustandes der Analogschalter 36 geschieht über eine Steuerleitung 13a, die zu der Übertragungssteuereinheit 8 hinführt.

Sowohl die beiden Verstärker 28 und 32 als auch die Gruppe der Analogschalter 36, die beispielsweise vom Typ HEF 4066 sind, sind, wie dies durch Leitungen 38 und 39 und die dargestellten Masseverbindungen veranschaulicht ist, stromversorgungsmäßig parallelgeschaltet und liegen gemeinsam über die Stromversorgungsleitung 14 an dem entsprechenden eigensicheren Netzgerät 15, das auch die Übertragungssteuereinheit 8 versorgt.

Jeder der Analogschalter 36 ist mit einem zugehörigen E/A-Anschluß 17a...17f verbunden, um bei eingeschalteter Schaltstrecke den entsprechenden E/A-Anschluß 17a...17f mit den beiden Verstärkern 28, 32 zu verbinden.

Das galvanische Trennmittel 18a enthält zwei Optokoppler 41 und 42, die so angeordnet sind, daß sie in entgegengesetzten Richtungen Daten übertragen können und deswegen auf ihrer der Multiplexerschaltergruppe 12 zugekehrten Seite elektrisch parallelgeschaltet sind.

Im einzelnen ist die Ausgangsseite 43 des Optokopplers 41 zwischen dem E/A-Anschluß 17a und die Schaltungsmasse des Trennmittels 18a geschaltet, die mit der Schaltungsmasse der Multiplexerschaltergruppe 12 gemeinsam ist. Die Eingangsseite 44 des Optokopplers 41 führt über den entsprechenden Teil der Verbindungsleitung 19a zu der Sendeseite der Interface-Schaltung 21a. Bei dem Optokoppler 42 ist zu dessen Eingangsseite 45 ein Ohmscher Widerstand 46 parallelgeschaltet und diese Parallelschaltung liegt einerseits wiederum an der Schaltungsmasse und andererseits über einen Serienwiderstand 47 an dem E/A-Anschluß 17a. Die beiden Widerstände 46 und 47 wirken so als Spannungsteiler, um eine Überlastung der Leuchtdiode in der Eingangsseite 45 des Optokopplers 42 zu vermeiden, da die aus dem E/A-Anschluß 17a kommende Versorgungsspannung einen Betrieb des Fototransistors an der Ausgangsseite 43 des Optokopplers 41 gewährleisten muß.

Die Ausgangsseite 48 des Optokopplers 42 ist über ein entsprechendes Adernpaar der Datenverbindungsleitung 19a mit der Empfangsseite der Interface-Schaltung 21a verbunden, im veranschaulichten Beispiel mit dem Eingang eines Monoflops 49, mit dem der Betriebszustand der Interface-Schaltung 21 gesteuert wird.

Die Stromversorgung der beiden Optokoppler 41 und 42 erfolgt auf ihre der Multiplexerschaltergruppe 12 zugewandten Seite mittels eines Pull-up-Widerstandes 51, der zwischen dem Ausgang 34 bzw. dem Eingang 29 und der Stromversorgung der beiden Verstärker 28 und 32 geschaltet ist. Die andere Seite der beiden Optokoppler 41 und 42 erhält ihre Versorgungsspannung, soweit notwendig, aus der Interface-Schaltung 21a, d.h. dem damit verbundenen eigensicheren Netzgerät 23a. Diese Stromversorgung ist durch einen Widerstand 52a schematisch veranschaulicht.

Das galvanische Trennmittel 18f kann ebenso wie das Trennmittel 18a aufgebaut sein, es kann aber auch, falls nur eine Datenübertragung von der Interface-Schaltung 21f erfolgt, ohne den Übertragungszweig in der entgegengesetzten Richtung, d.h. ohne den Optokoppler 41 aufgebaut sein. Im veranschaulichten Beispiel ist angenommen, daß die Datenübermittelung lediglich von der Interface-Schaltung 21f zu der Multiplexerschaltergruppe 12 erfolgt. Das Trennmittel 18f enthält deswegen nur die dem Optokoppler 42 aus dem Trennmittel 18a entsprechenden Schaltelemente, die im Trennmittel 18f mit demselben Bezugszeichen mit angehängtem Index f bezeichnet sind.

Es gibt deswegen die erwähnte galvanische Trennung, die durch eine strichpunktierte Linie 53 schematisch angedeutet ist und die potentialmäßige Grenze zwischen der Multiplexerschaltergruppe 12 und dem zugeordneten Teilen der Trennmittel 18a...18f einerseits und den Interface-Schaltungen 21a...21f und den diesen zugeordneten Teilen der Trennmittel 18a...18f symbolisiert.

Zur Erläuterung der Funktionsweise sei angenommen, daß von dem Zentralsystem 2 Daten zu dem Feldgerät 26f hin übertragen werden sollen. Diese Daten gelangen mit der entsprechenden Adresse versehen über die Datenverbindung 4 zum Port 5 und dort in das Kommunikationsteil 6, das die Daten an die Übertragungssteuereinheit 8 weiterleitet. Die Übertragungssteuereinheit 8 erkennt aufgrund der mitgelieferten Adresse, daß die Daten für das Feldgerät 26f, beispielsweise das Magnetventil, bestimmt sind, und schließt deswegen über die entsprechende Steuerleitung 13a den zugehörigen Analogschalter 36f. Hierdurch wird eine galvanische Verbindung zwischen der Eingangsseite 45f des Optokopplers 42f mit dem Tristateausgang 34 des Verstärkers 32 hergestellt.

Sobald die Verbindung insoweit vorbereitet ist, schaltet die Übertragungssteuereinheit 8 über die Leitung 13c das Inhibitsignal für den Verstärker 32 ab, während das Inhibitsignal für den Verstärker 28 eingeschaltet bleibt. Der Verstärker 32 ist somit jetzt in der Lage, die über die Datenleitung 11 von der Übertragungssteuereinheit 8 angelieferten Daten als elektrische Signale über den geschlossenen Analogschalter 36f in den Optokoppler 42 f einzuspeisen, d.h. die dort in der Eingangsseite 45f enthaltene Leuchtdiode entsprechend zum Leuchten zu bringen. Der Pull-up-Widerstand 51 ist in diesem Betriebsfall nur dann von Bedeutung, wenn der Verstärker 32 beispielsweise eine Endstufe in Openkollektorausführung aufweist. Dann erhält die Leuchtdiode des Optokopplers 42f den Strom über den Pull-up-Widerstand 51 und den geschlossenen Analogschalter 36f.

Handelt es sich hingegen um einen Verstärker mit einem Pull-up- und einem Pull-down-Transistor, dann ist der Widerstand 51 für diese Übertragungsrichtung bedeutungslos.

Die von der Zentrale 2 gesendeten Daten gelangen somit galvanisch getrennt über den Optokoppler 42f zu der entsprechend angesteuerten Interfaceschaltung 21f, die dementsprechend ein Öffnen oder Schließen des Magnetventils 26f bewirkt, wobei der notwendige Strom aus dem der Interfaceschaltung 21f zugeordneten eigensicheren Netzgerät 23f kommt.

Wenn hingegen die Zentraleinheit 2 die Meßdaten des Meßgerätes 26a abfragen will, sendet sie zunächst über die Datenverbindung 4 an den Kommunikationsteil 6 des Multiplexers 1 eine entsprechende Abfrageanforderung unter Angabe der Adresse des gewünschten Meßgerätes. Diese von dem Kommunikationsteil 6 an die Übertragungssteuereinheit 8 weitergeleitete Abfrageanforderung wird von dieser erkannt und sie schaltet daraufhin, falls dies nicht bereits ohnehin vorher geschehen ist, die Inhibitsignale für beide Verstärker 28 und 32 ein, womit beide Ausgänge 31 und 34 hochohmig sind.

Da die Meßdaten des Meßgerätes 26a angefordert sind, wird von der Übertragungssteuereinheit 8 über die Steuerleitungen 13a der Analogschalter 36a geschlossen, so daß jetzt die beiden Optokoppler 41 und 42 an ihrer Ein- bzw. Ausgangsseite 43, 45 über den Pull-up-Widerstand 51 mit Strom versorgt werden. Nachdem die Verbindung über den Analogschalter 36a geschaltet ist, wird von der Übertragungssteuereinheit 8 zunächst eine Startaufforderung an das Feldmeßgerät 26a abgegeben, wozu das Inhibitsignal an dem Inhibiteingang 36 abgeschaltet wird. Der Verstärker 32 kann jetzt das von der Übertragungssteuereinheit 8 auf der Datenleitung 11 abgegebene Signal über den geschlossenen Analogschalter 36 der Eingangsseite 45 des Optokopplers 42 übermitteln. Dieses Signal wird galvanisch getrennt, beispielsweise in das Monoflop 49 eingespeist, das daraufhin den Meßvorgang initialisiert.

Sobald die Startinformation abgegeben ist, schaltet die Übertragungssteuereinheit 8 das Inhibitsignal an dem Inhibiteingang 36 wieder ein und stattdessen das Inhibitsignal an dem Eingang 35 ab. Wenn jetzt das Meßgerät 26a über die Interfaceschaltung 21a seine Meßdaten zu senden beginnt, gelangen die Meßdaten in den Eingang 44 des Optokopplers 41 und von dort galvanisch getrennt über dessen Ausgangsseite und den geschlossenen Analogschalter 36a zu dem Eingang 29 des Verstärkers 28, der diese Signale über die Leitung 11 in die Übertragungssteuereinheit 8 einspeist.

In diesem Betriebszustand arbeitet der Pull-up-Widerstand 51 als Arbeitswiderstand für den Fototransistor im Ausgang 43 des Optokopplers 41.

Nachdem alle Daten angekommen sind oder auch möglicherweise ein zeitliches Limit abgelaufen ist, wird auch das Inhibitsignal für den Inhibiteingang 35 wieder eingeschaltet und der Ausgang 31 nimmt seinen hochohmigen Zustand an.

Die von der Übertragungssteuereinheit 8 empfangenen Daten können dort entweder zwischengepuffert werden oder simultan mit dem Erhalt via Kommunikationsteil 6 der Zentraleinheit 2 übermittelt werden.

Abgesehen von den beschriebenen Schaltungsvarianten ist es auch möglich, das Trennmittel 18 nur mit dem Optokoppler 41 zu versehen, falls das Feldgerät ständig Daten abgibt und zum Empfang der Daten durch den Multiplexer 1 keine Startaufforderung an das jeweilige Meßgerät abgegeben werden muß.

Der oben beschriebene Funktionsablauf wird abgewickelt, wenn von der Multiplexerschaltergruppe 12 an die Interfaceschaltung 21a eine Startinformation abgegeben werden muß, die länger ist als ein Bit. Wenn die Startinformation lediglich ein Bit lang ist, kann der Verstärker 32 durchaus über seinen Inhibiteingang 36 im hochohmigen Zustand verbleiben. Die Ein-Bit-Information, die zum Umschalten des Monoflop 49 notwendig ist, wird bereits erzeugt, wenn die Übertragungssteuereinheit 8 über die Steuerleitung 13a den Analogschalter 36a schließt, da hierdurch erstmalig die Eingangsseite 45 des Optokopplers 42 mit dem Pull-up-Widerstand 51 verbunden wird, so daß bei einer positiven Logik eine ansteigende Impulsflanke über den Optokoppler 42 zu dem Monoflop 49 übertragen wird, das daraufhin gesetzt wird und das Übertragen der Meßdaten von der Interfaceschaltung 21 zu der Warte hin initialisiert. Die Übertragungssteuereinheit 8 schaltet deswegen umgehend nach dem Einschalten des Analogschalters 36a das Inhibitsignal für den Verstärker 28 ab, so daß sofort anschließend die Daten von der Interfaceschaltung 21a galvanisch über den Optokoppler 41 erhalten werden können.

Da bei der Datenübertragung von der Interfaceschaltung 21 über den Optpkoppler 41 gleichzeitig im Takt auch die Eingangsseite des Optokopplers 42 beaufschlagt wird - denn beide Optokoppler haben den Pull-up-Widerstand 51 als Arbeitswiderstand, gelangen die von der Interfaceschaltung 21a abgesendeten Daten über den Optokoppler 42 wieder zu der Interfaceschaltung 21a zurück, und zwar zu dem Steuereingang des Monoflops 49, das deswegen während der Datenübertragung immer wieder getriggert wird und deswegen den getriggerten Zustand beibehält.

Erst wenn die Datenübertragung von der Interfaceschaltung 21a unterbrochen werden soll, wird von der Übertragungssteuereinheit 8 der Analogschalter 36a wieder geöffnet, womit auch die Versorgungsspannung für die Ausgangsseite 43 des Optokopplers 41 und die Eingangsseite 45 des Optokopplers 42 abgeschaltet wird. Die nun noch von der Interfaceschaltung 21a weiterhin gesendeten Daten können deswegen nicht mehr über den Optokoppler 42 zu dem Monoflop 49 zurückgeführt werden, womit das Retriggern des Monoflops 49 unterbrochen wird, das jetzt nach Ablauf der Zeitkonstanten in den Ruhezustand zurückkehren kann, um die Interfaceschaltung 21a in den Ruhezustand zu überführen.

Es versteht sich, daß die Retriggerung des Monoflops 49 unabhängig davon ist, wie lang das Startsignal ist und ob zur Übermittlung des Startsignals, wie weiter oben beschrieben, der Verstärker 32 aktiviert wird oder nicht.

Wie sich aus der Beschreibung weiter ergibt, gestattet die gezeigte Multiplexerschaltergruppe 12 ohne Änderung sowohl Halbduplexbetrieb als auch Simplexbetrieb, und zwar in jeder der beiden möglichen Richtungen. Andererseits erfolgt die Stromversorgung der Ein- oder Ausgangsseite des jeweils aktiven Optokopplers oder Paares von Optokopplern 41, 42 aus der Multiplexerschaltergruppe 12, da mit den dort enthaltenen Analogschaltern 36 auch die Speisespannung für die entsprechenden Optokoppler eingeschaltet wird. Die Schaltung ist deswegen sehr energiesparend, da keine nicht aktiven Datenstrecken die Ausgangsspannung desjenigen eigensicheren Netzgerätes belasten, das die Multiplexerschaltergruppe 12 und die entsprechenden anderen Bausteine versorgt. Dies ist besonders wichtig, da die Stromgrenze bei Eigensicherheit verhältnismäßig niedrig liegt.

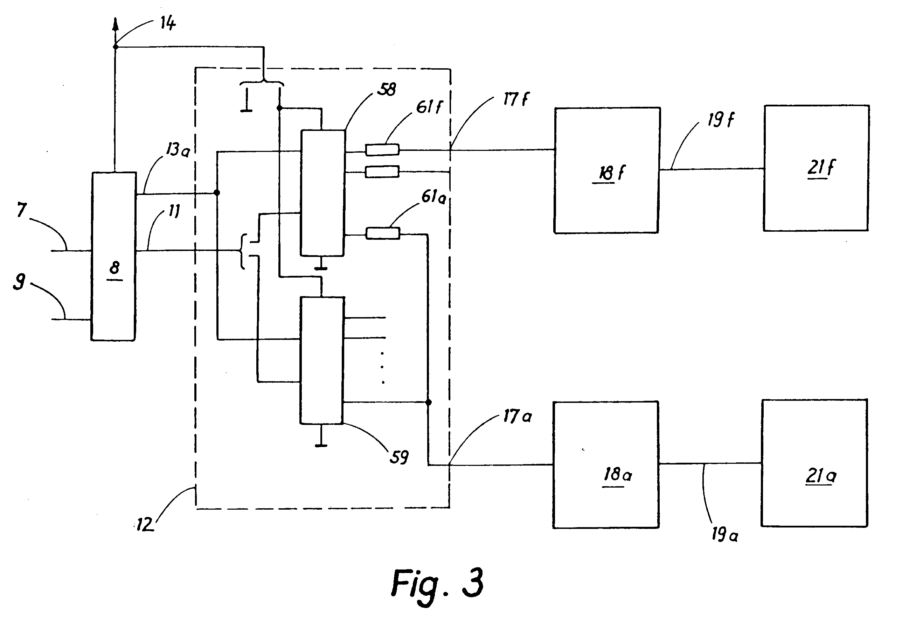

Es ist jedoch auch möglich,die gewünschte Funktion unter Verwendung von Digitalschaltern in der Multiplexerschaltergruppe 12 zu verwirklichen, wie dies Fig. 3 zeigt.

Anstelle des in Verbindung mit Fig. 2 erläuterten integrierten Analogschalters können in der Multiplexerschaltergruppe 12 auch Datenselektoren bzw. Decoder in TTL- oder CMOS-Ausführung verwendet werden, beispielsweise der Typ SN 74150 bzw. der Typ SN 74159.

In Fig. 3 ist der Datenselektor mit 58 und der Decoder mit 59 bezeichnet. Beide Bausteine sind versorgungsspannungsmäßig zu der Übertragungssteuereinheit 8 über die Leitung 14 parallelgeschaltet und werden deswegen, wie vorher, aus demselben eigensicheren Netzgerät 15 gespeist. Die Eingangsseite des Datenselektors 58 liegt über die Verbindung 11 an dem entsprechenden Anschluß der Übertragungssteuereinheit 8, an den auch über diese Datenverbindung 11 der Decoder 59 angeschlossen ist. Sowohl der Decoder als auch der Datenselektor werden gemeinsam über die Steuerleitung 13a zum Anwählen des richtigen Aus- bzw. Eingangs angesteuert.

Jeder Ausgang des Datenselektors 58 ist über einen zugehörigen Widerstand 61a...61f mit dem entsprechenden E/A-Anschluß 17a...17f verbunden. Zu diesem Anschluß führt auch der zu der jeweiligen Adresse gehörende Eingangsanschluß des Decoders 59.

Die an die E/A-Anschlüsse 17a...17f angeschlossenen Trennmittel 18a...18f sind genauso aufgebaut,wie dies im Zusammenhang mit Fig. 2 ausführlich erläutert ist.

Bei der Ausführungsform nach Fig. 3 besteht also auch eine galvanische Trennung zwischen der Multiplexerschaltergruppe 12 und den Interface-Schaltungen 21a...21f, so daß insoweit dieselben Vorteile wie mit der Schaltung nach Fig. 2 erzeugt werden. Entsprechend dem Sendewunsch der Zentraleinheit 2 schaltet die Übertragungssteuereinheit 8 den Datenselektor 58 und den Decoder 59 derart, daß nur der entsprechende adressierte E/A-Anschluß 17a...17f zu dem Datenein- bzw. Datenausgang der Übertragungssteuereinheit 8 durchgeschaltet ist, damit, wie vorher beschrieben, die Daten entweder von der Zentraleinheit 2 an das jeweilige Feldgerät 26a...26f oder umgekehrt von dem jeweils angesprochenen Feldgerät 26a...26f zu der Zentraleinheit 2 übermittelt werden können.

In sämtlichen Figuren sind, wie dies üblich ist, die Datenverbindungen durch lediglich eine einzige Linie dargestellt. Es versteht sich jedoch, daß dies eine der Übersichtlichkeit dienende Vereinfachung ist und daß gegebenenfalls diese Daten-oder auch Steuerverbindungen mehrpolige Verbindungen sind, entsprechend den Spezifikationen des jeweils verwendeten Bausteins und der Größe der maximal möglichen Adresse bzw. der Parallelität der zu übertragenden Informationen.

## Patentansprüche

1. In explosionsgefährdeten Bereichen verwendbarer explosionsgeschützter Multiplexer (1),
mit einer Kommunikationseinheit (6) (Sende-/Empfangseinheit), die einen Ein-/Ausgabe-Port (5), über den der Multiplexer (1) mittels elektrischer Leitungen (4) an ein entferntes System (2) anschließbar ist, sowie einen internen Ein- und/oder Ausgang aufweist,
mit an Ein-/Ausgabeanschlüssen (17) anschließbaren Schnittstellenbaugruppen (21) (Interface-Schaltungen), die über Leitungen mit Feldgeräten (26), wie Meß-, Regel- und Stellgeräten verbunden und in der Zündschutzart Eigensicherheit "i" nach DIN EN 50020 ausgeführt sind,
sowie mit einer Übertragungssteuereinheit (8) zur Steuerung der Datenverbindung zwischen dem Ein-/Ausgabe-Port (5) und den Schnittstellenbaugruppen (21),
dadurch gekennzeichnet, daß
zwischen den Ein-/Ausgabeanschlüssen (17) und den Schnittstellenbaugruppen (21) Mittel (18) vorgesehen sind, durch die eine jede Schnittstellenbaugruppe (21) für sich galvanisch getrennt an die Ein-/Ausgabeanschlüsse (17) angeschlossen ist,
daß die Mittel (18) sternförmig an die Ein-/Ausgabeanschlüsse (17) angeschaltet sind und
daß für jede Schnittstellenbaugruppe (21) je ein eigenes, von den übrigen galvanisch getrenntes Netzteil (23) vorgesehen ist.

2. Multiplexer nach Anspruch 1, dadurch gekennzeichnet, daß die Mittel (18a...18f) zur galvanischen Trennung Optokoppler (41, 42, 42f) enthalten.

3. Multiplexer nach Anspruch 1, dadurch gekennzeichnet, daß ein Pufferspeicher vorhanden ist, in dem, gesteuert durch die Übertragungssteuereinheit (8), Daten von und zu den Schnittstellenbaugruppen (21a...21f) zwischenzuspeichern sind, derart, daß die Datenverbindung zu dem entfernten System (2) ein Message- oder Package-Switching ist.

4. Multiplexer nach Anspruch 1, dadurch gekennzeichnet, daß der E/A-Port (5) eine galvanische Trennung aufweist.

5. Multiplexer nach Anspruch 1, dadurch gekennzeichnet, daß zwischen der Kommunikationseinheit (6) und den Ein-/Ausgabeanschlüssen (17a...17f) für die Schnittstellenbaugruppen (21a...21f) ein E/A-Bus vorgesehen ist, und daß die E/A-Anschlüsse (17a...17f) mit diesem verbunden sind.

6. Multiplexer nach Anspruch 1, dadurch gekennzeichnet, daß die Datenverbindung mit einer jeweiligen Schnittstellenbaugruppe (21a...21f) über den jeweiligen einen E/A-Anschluß (17a...17f) eine serielle Simplexverbindung ist.

7. Multiplexer nach Anspruch 1, dadurch gekennzeichnet, daß die Datenverbindung mit einer jeweiligen Schnittstellenbaugruppe (21a...21f) über den jeweiligen Ein-/Ausgabeanschluß eine serielle Halbduplexverbindung ist.

8. Multiplexer nach Anspruch 1, dadurch gekennzeichnet, daß von der Übertragungssteuereinheit (8) gesteuerte Mehrfachschaltermittel (36, 36a...36f, 58, 59) vorhanden sind, die in jeder Datenverbindung zu den entsprechenden Ein-/Ausgabeanschlüssen (17a...17f) für die entsprechende Schnittstellenbaugruppe (21a...21f) liegen und über die zeitlich exklusiv jeweils eine Datenverbindung mit der entsprechenden Schnittstellenbaugruppe (21a...21f) herstellbar ist.

9. Multiplexer nach den Ansprüchen 6 und 8, dadurch gekennzeichnet, daß im Falle einer Simplexdatenverbindung die Eingangsseite (45) oder die Ausgangsseite (43) eines Optokopplers (41, 42) mit einem zugehörigen Ausgang der Mehrfachschaltermittel (36, 36a...36f, 58, 59) verbunden ist, und daß der jeweilige Optokoppler (41, 42) als galvanisches Trennmittel (18a...18f) der jeweiligen Schnittstellenbaugruppe (21a...21f) zugeordnet ist.

10. Multiplexer nach den Ansprüchen 7 und 8, dadurch gekennzeichnet, daß im Falle einer Halbduplexdatenverbindung mit dem jeweiligen Ausgang der Mehrfachschaltermittel (36, 36a...36f, 58, 59) die Eingangsseite (45) eines Optokopplers (42) und die Ausgangsseite (43) eines zweiten Optokopplers (41) verbunden sind, und daß die beiden Optokoppler (41, 42) als galvanische Trennmittel (18a...18f) derselben Schnittstellenbaugruppe (21a...21f) zugeordnet sind.

11. Multiplexer nach Anspruch 8, dadurch gekennzeichnet, daß die Mehrfachschaltermittel (36) elektronische Analogschalter (36a...36f) mit Steuereingängen, Dateneingängen und Datenausgängen enthalten, von denen jeweils einer einem E/A-Anschluß (17a...17f) für die entsprechende Schnittstellenbaugruppe (21a...21f) zugeordnet ist, und daß alle Dateneingänge (37) gemeinsam mit einem Eingang und/oder Ausgang einer Treiberschaltung (28, 32) verbunden sind, und die Steuereingänge mit der Übertragungssteuereinheit (8) verbunden sind.

12. Multiplexer nach Anspruch 11, dadurch gekennzeichnet, daß die Treiberschaltung Verstärker (28, 32) mit einem Dateneingang (29, 33), einem Tristateausgang (31, 34) und einem Steuereingang (35, 36) aufweist, über den ein jeweiliger Verstärker (28, 32) wahlweise derart steuerbar ist, daß der Tristateausgang (31, 34) den hochohmigen Zustand einnimmt und der mit der Übertragungssteuereinheit (8) verbunden ist, und daß der Eingang (29) des einen Verstärkers (28) mit dem Ausgang (34) des anderen Verstärkers (32) verbunden ist und umgekehrt, derart, daß beide Verstärker (28, 32) antiparallel geschaltet sind.

13. Multiplexer nach Anspruch 11, dadurch gekennzeichnet, daß der Eingang (37) der Mehrfachschaltermittel (36) mit einem Pull-up-Widerstand (51) verbunden ist.

14. Multiplexer nach Anspruch 8, dadurch gekennzeichnet, daß die Mehrfachschaltermittel (36) von Datenselektoren (58) und Decodern (59) gebildet sind, wobei der Eingang des Datenselektors und der Ausgang des Decoders mit dem entsprechenden Datenein-/-ausgang der Übertragungssteuereinheit (8) verbunden ist und jeweils ein Datenausgang des Datenselektors (58) einem E/A-Anschluß (18a...17f) zugeordnet ist, und daß an den E/A-Anschluß (17a...17f) derjenige Dateneingang des Decoders (59) angeschlossen ist, der dieselbe Adresse aufweist wie der an diesen E/A-Anschluß (17a...17f) angeschlossene Ausgang des Datenselektors (58).

## Claims

1. Explosion-protected multiplexer (1), which may be used in areas under risk from explosions, comprising
a communications unit (6) (transmitter/receiver unit) provided with an input/output port (5), which may be linked to a remote system (2) via said multiplexer (1) by means of electric lines (4), and an internal input and/or output;
interface assemblies (21) (interface circuits), which may be connected to input/output terminals (17) and are linked via lines to field devices (26), such as measuring, control and correcting instruments, and are of the protection type intrinsically safe "i" according to DIN EN 50020;
as well as a transmission control unit (8) to control the data circuit between said input/output port (5) and said interface assemblies (21),
characterised in that
between said input/output terminals (17) and said interface assemblies (21) means (18) are provided, by which each one of said interface assemblies (21) is connected, each separately electrically isolated, to said input/output terminals (17);
that said means (18) are connected in star configuration to said input/output terminals (17), and
that each interface assembly (21) is provided with its own power supply unit (23) which is electrically isolated from the others.

2. Multiplexer according to Claim 1, characterised in that the means (18a...18f) comprise opto-couplers (41, 42, 42f) for electrical isolation.

3. Multiplexer according to Claim 1, characterised in that a buffer memory is provided, in which, controlled by the transmission control unit (8), data are buffered from and to the interface assemblies (21a...21f) in such a way that the data circuit to the remote system (2) is a message or packet switching service.

4. Multiplexer according to Claim 1, characterised in that the I/O port (5) is provided with electrical isolation means.

5. Multiplexer according to Claim 1, characterised in that an I/O bus is provided between the communications unit (6) and the input/output terminals (17a...17f) for the interface assemblies (21a...21f), and that said I/O terminals (17a...17f) are connected thereto.

6. Multiplexer according to Claim 1, characterised in that the data circuit to a respective interface assembly (21a...21f) via a respective I/O terminal (17a...17f) is a serial one way communication.

7. Multiplexer according to Claim 1, characterised in that the data circuit to a respective interface assembly (21a...21f) via a respective I/O terminal is a serial half-duplex communication.

8. Multiplexer according to Claim 1, characterised in that multiple switch units (36, 36a...36f, 58, 59) controlled by the transmission control unit (8) are provided, which are located in each data circuit to the corresponding input/output terminals (17a...17f) for the corresponding interface assembly (21a...21f) and by means of which a respective data circuit to the corresponding interface assembly (21a...21f) may be created one at a time.

9. Multiplexer according to Claims 6 and 8, characterised in that in the case of an one way communication, the input side (45) or the output side (43) of an opto-coupler (41, 42) is connected to a corresponding output of the multiple switch units (36, 36a...36f, 58, 59), and that the respective opto-coupler (41, 42) is allocated to the respective interface assembly (21a...21f) as electrical isolation means (18a...18f).

10. Multiplexer according to Claims 7 and 8, characterised in that in the case of a half-duplex communication respective output of the multiple switch units (36, 36a...36f, 58, 59), the input side (45) of an opto-coupler (42) and the output side (43) of a second opto-coupler (41) are connected, and that both opto-couplers (41, 42) are allocated to the same interface assembly (21a...21f) as electrical isolation means (18a...18f).

11. Multiplexer according to Claim 8, characterised in that the multiple switch units (36) comprise electronic analog switches (36a...36f) with control inputs, data inputs and data outputs, one of each of which is allocated to an I/O terminal (17a...17f) for the corresponding interface assembly (21a...21f); and that all data inputs (37) are jointly connected to an input and/or output of a driver circuit (28, 32), and the control inputs are connected to the transmission control unit (8).

12. Multiplexer according to Claim 11, characterised in that the driver circuit is provided with amplifiers (28, 32) having a data input (29, 33), a tristate output (31, 34) and a control input (35, 36), by means of which a respective amplifier (28, 32) may be selectively controlled in such a way that said tristate output (31, 34) becomes high-impedance and is connected to the transmission control unit (8); and that the input (29) of one amplifier (28) is connected to the output (34) of the other amplifier (32) and vice versa in such a way that both amplifiers (28,32) are switched back-to-back.

13. Multiplexer according to Claim 11, characterised in that the input (37) of the multiple switch units (36) is connected to a pull-up resistor (51).

14. Multiplexer according to Claim 8, characterised in that the multiple switch units (36) are formed by data selectors (58) and decoders (59), wherein the input of the data selector and the output of the decoder is connected to the corresponding data input/output of the transmission control unit (8) and a respective data input of the data selector (58) is allocated to an I/O terminal (17a...17f); and that the data input of decoder (59) connected to said I/O terminal (17a...17f) is that which has the same address as the output of data selector (58) connected to this I/O terminal (17a...17f).

## Revendications

1. Multiplexeur (1) antidéflagrant pouvant être utilisé en atmosphères explosibles comportant
une unité de communication (6) (unité d'émission/réception) qui présente un point de connexion d'entrée/sortie (5) par l'intermédiaire duquel le multiplexeur (1) peut être connecté par des lignes électriques (4) à un système (2) éloigné, ainsi qu'une entrée et/ou sortie interne,
des modules interfaces (21) (circuits interfaces) qui peuvent être connectés à des connecteurs d'entrée/sortie (17), sont reliés à des appareils installés (26) tels que des appareils de mesure, de régulation et de réglage par l'intermédiaire de lignes et et présentent une construction antidéflagrante du type à sécurité intrinsèque "i" selon la norme DIN EN 50020,
ainsi qu'une unité de commande de transmission (8) destinée à commander la liaison de données entre le point de connexion d'entrée/sortie (5) et les modules interfaces (21),
caractérisé
par le fait qu'il est prévu, entre les connecteurs d'entrée/sortie (17) et les modules interfaces (21), des moyens (18) par l'intermédiaire desquels chaque module interface (21) est connecté aux connecteurs d'entrée/sortie (17) avec isolation électrique propre,
par le fait que les moyens (18) sont connectés en étoile aux connecteurs d'entrée/sortie (17) et
par le fait qu'il est prévu pour chaque module interface (21) une partie réseau (23) qui est isolée électriquement des autres.

2. Multiplexeur selon la revendication 1, caractérisé par le fait que les moyens (18a ... 18f) d'isolation électrique comprennent des coupleurs optiques (41, 42, 42f).

3. Multiplexeur selon la revendication 1, caractérisé par le fait qu'il est prévu une mémoire tampon dans laquelle des données en provenance des ou à destination des modules interfaces (21a... 21f) sont stockées temporairement, de manière commandée par l'unité de commande de transmission (8), de manière telle que la liaison de données avec le système éloigné (2) est une commutation de message ou de paquet.

4. Multiplexeur selon la revendication 1, caractérisé par le fait que le point de connexion d'entrée/sortie (5) comporte une séparation galvanique.

5. Multiplexeur selon la revendication 1, caractérisé par le fait qu'il est prévu entre l'unité de communication (6) et les connecteurs d'entrée/sortie (17a ... 17f) pour les modules interfaces (21a ... 21f) un bus d'entrée/sortie et par le fait que les connecteurs d'entrée/sortie (17a ... 17f) sont connectés à celui-ci.

6. Multiplexeur selon la revendication 1, caractérisé par le fait que la liaison de données avec un module interface (21a ...21f) donné par l'intermédiaire du connecteur d'entrée/sortie (17a ... 17f) concerné est une liaison simplex série.

7. Multiplexeur selon la revendication 1, caractérisé par le fait que la liaison de données avec un module interface (21a ...21f) donné par l'intermédiaire du connecteur d'entrée/sortie (17a ... 17f) concerné est une liaison semi-duplex série.

8. Multiplexeur selon la revendication 1, caractérisé par le fait qu'il est prévu des moyens de commutation multiple (36, 36a ... 36f, 59) qui sont commandés par l'unité de commande de transmission (8), sont placés dans chaque liaison de données en direction des connecteurs d'entrée/sortie (17a ... 17f) pour le module interface (21a ... 21f) concerné et par l'intermédiaire desquels une liaison de données peut être réalisée de manière exclusive dans le temps avec le module interface (21a ... 21f) concerné.

9. Multiplexeur selon les revendications 6 et 8, caractérisé par le fait que, dans le cas d'une liaison de données simplex, le côté entrée (45) ou le côté sortie (43) d'une coupleur optique (41, 42) est connecté à une sortie correspondante des moyens de commutation multiple (36, 36a ... 36f, 58, 59) et par le fait que le coupleur optique (41, 42) concerné est associé en tant que moyens d'isolation électrique (18a ... 18f) au module interface concerné (21a ... 21f).

10. Multiplexeur selon les revendications 7 et 8, caractérisé par le fait que, dans le cas d'une liaison de données semi-duplex, le côté entrée (45) d'un coupleur optique (42) et le côté sortie (43) d'un deuxième coupleur optique (41) sont connectés à la sortie correspondante des moyens de commutation multiple (36, 36a ... 36f, 58, 59) et par le fait que les deux coupleurs optiques (41, 42) sont associés en tant que moyens d'isolation électrique (18a ... 18f) audit module interface (21a ... 21f).

11. Multiplexeur selon la revendication 8, caractérisé par le fait que les moyens de commutation multiple (36) comprennent des commutateurs analogiques (36a ... 36f) électroniques avec des entrées de commande, des entrées de données et des sorties de données qui sont associées chacune à un connecteur d'entrée/sortie (17a...17f) pour le module interface (21a...21f) concerné et par le fait que toutes les entrées de données (37) sont connectées ensemble à une entrée et/ou sortie d'un circuit d'attaque (28, 32) et les entrées de commande sont connectées à l'unité de commande de transmission (8).

12. Multiplexeur selon la revendication 11, caractérisé par le fait que le circuit d'attaque comporte des amplificateurs (28, 32) avec une entrée de données (29, 33), une sortie à trois états (31, 34) et une entrée de commande (35, 36), par l'intermédiaire de laquelle un amplificateur (28, 32) donné peut être commandé de manière sélective de telle sorte que sa sortie à trois états prenne l'état à valeur ohmique élevée et soit connectée à l'unité de commande de transmission (8) et par le fait que l'entrée (29) de l'un des amplificateurs (28) est connectée à la sortie (34) de l'autre amplificateur (32) et vice-versa de telle sorte que les deux amplificateurs (28, 32) forment un branchement antiparallèle.

13. Multiplexeur selon la revendication 11, caractérisé par le fait que l'entrée (37) des moyens de commutation multiple (36) est connectée à une résistance de charge (51).

14. Multiplexeur selon la revendication 8, caractérisé par le fait que les moyens de commutation multiple (36) sont constitués par des sélecteurs de données (58) et des décodeurs (59), l'entrée du sélecteur de données et la sortie du décodeur étant connectées à l'entrée/sortie de données correspondante de l'unité de commande de transmission (8) et une sortie de données du sélecteur de données (58) étant associée chaque fois à un connecteur d'entré/sortie (18a...18f) et par le fait qu'au connecteur d'entrée/sortie (17a...17f) est connectée l'entrée de données du décodeur (59) qui présente la même adresse que la sortie du sélecteur de données (58) connectée audit connecteur d'entrée/sortie (17a...17f).
